Europäisches Patentamt

European Patent Office

Office européen des brevets

(11) Publication number: **0 338 964**
**A2**

# EUROPEAN PATENT APPLICATION

(21) Application number: 89500008.1

(51) Int. Cl.⁴: **G 06 F 15/72**

(22) Date of filing: 23.01.89

(30) Priority: **25.01.88 ES 8800168**

(43) Date of publication of application:
**25.10.89 Bulletin 89/43**

(84) Designated Contracting States:
**AT BE CH DE FR GB GR IT LI NL**

(71) Applicant: **ADVANCED SCIENTIFIC TECHNOLOGIES EUROPE, S.A.**
**Ctra. Nacional II Km. 550,9**
**E-08700 Igualada (Barcelona) (ES)**

(72) Inventor: **Prat Tomas, Isidre**
**Pg. Verdaguer, 102**
**E-08700 Igualada (Barcelona) (ES)**

(74) Representative: **Ponti Grau, Ignási**
**Paseo de Gracia, 33**
**E-08007 Barcelona (ES)**

(54) Pattern design, grading and marking optimizing system for garment industries.

(57) The pattern design, grading and marking optimizing system for garment industries is featured by the fact that the first module digitizer comprises a table including a two-dimension grating, and a locating device consisting of a pencil-like body to generate a magnetic field the intensity of which is picked-up at the grating junction, the table being provided with a digitizing menu comprising a plurality of icons adapted to be selected by means of the locating pencil, each said icons corresponding to program options permitting to progressively define an outline on the computer console of the first module.

The use of the icon menu allows to dispense with the creation of a special keyboard each of whose keys represents a particular graphic option, besides the digitizer, to create and move two-dimension patterns. This provides a cost improvement and a technical simplification enhancing the system reliability and increases the system ergonomics.

FIG.1

FIG.5

EP 0 338 964 A2

**Description**

## PATTERN DESIGN, GRADING AND MARKING OPTIMIZING SYSTEM FOR GARMENT INDUSTRIES

The present invention relates to a pattern design, grading and marker optimizing system in textile garment industries, based on the use of computer graphics.

The system aims to the subject of solving the outline creating functions, improvement of the outlines and specifications and scaling or grading of textile making-up patterns, to allow the distribution of the already defined and scaled patterns onto the surface of a textile material in view of using to the better advantage the said material.

### BACKGROUND OF THE INVENTION

There are already known pattern design, grading and marker optimizing systems in textile making-up, comprising a first module including a computer processing central unit, a digitizer, a direct access memory unit, a sequential access memory unit, complete or shared, a computer console, controllers and interfaces for peripherals, and eventually a data output peripheral member, the first module electronically codifies the information relating to a two-dimension outline and applies to it a grading or scaling, the informations about treatments and operations performed on the patterns being permanently stored; a second module including a computer processing central unit, a direct access memory unit, a sequential access memory unit and a computer console, this second module locating the outlines which are stored in the direct access memory unit onto a band of material, such that the outlines cover the greatest possible surface of the material; and a third module including a computer process ing central unit, a first controller for drives and a second controller for the console, interfaces for the said controllers and a drawing device provided with a table upon which the material to be scored is placed, and the corresponding drawing head and means for operating it.

The outer memory units may be shared by the three processing central units.

The first module electronically codifies information relating to a two-dimension outline and applies to it a grading or scaling, the information about treatments and operations performed on the patterns being permanently stored.

The second module locates the outlines stored in the direct access memory onto a band of material, such that the outlines cover the greatest possible surface of the material.

The third module performs drawing on paper sheet indicating the outline to be cut later on in a material upon which the scored paper is located.

In the known system the several graphic options are defined by means of a special keyboard, which leads to a rather complex handling.

### DESCRIPTION OF THE INVENTION

The system according to the invention provides improvements which make easier the make-up of the patterns, design, grading and marker optimizing, a better ergonomics, as well as other advantages to be described.

The system for pattern design, grading and marker optimizing in textile make-up forming the subject of the invention is featured in that the first module digitizer comprises a table including a two-dimension grating connected to a codifying network for the several magnetic field intensities corresponding to every one junction of the grating, and a locating device consisting of a pencil-like body including s metallic core, an induction coil surrounding the core to generate a magnetic field the intensity of which is picked-up at the grating junction in contact with the outer end of the metallic core, and a contact switch which closes merely under pressure to activate the network, the table being provided with a digitizing menu comprising a plurality of icons adapted to be selected by means of the locating pencil, each said icons corresponding to program options permitting to progressively define an outline on the computer console of the first module.

The use of the icon menu makes it possible to dispense with the creation of a special keyboard in which every one key means a particular graphic option, besides the digitizer, to create and move outlines in two directions. This leads to a cost improvement and a technical simplification enhancing the reliability, and increases the ergonomics of the system.

The icons of the digitizing menu correspond to the options of: loading pattern, storing a pattern, abort option, exit, digitize, create outline, erase outline, modifications, vertex, outline (pass point), symmetry, origin change, point switching, move point, insert point, interpolate, erase, move upwards, restore, DIN options, increase DIN size, reduce DIN size, move right, move left, move downwards, centering, automatic zoom, digitized digitizing, refined digitizing, refined refining, dimension lines, coordinates, surface outlines, special points, reference point, thread beginning, text insertion and thread end.

The digitizer of the first module provides for digitizing globally and at a time shapes of a dimension of up to DIN A0 size, because the table has this size indeed. This allows to work with actual size outlines with measurements of up to 150 x 80 cm.

Digitizing and further storing of points is performed through a vectorial system, so that a greater calculation speed is obtained by applying the modifications and gradings to the outlines, thus reducing the amount of information to be treated and with no loss of accuracy as regards the original.

The program incorporated in the first module allows the development of hollow patterns, i.d., patterns which are defined by an outer outline and an inner outline. It is even possible to develop a pattern with three outlines; one outer outline and two inner outlines, thus making it possible to prepare textile pieces which are trimmed within their outer outline starting from a single pattern. This is not possible with the existing patterning systems, in which the pattern is always a closed and solid surface, or the internal outlines are an extension of the main outline.

The monitor of the second module is of greater dimensions that the monitor of the first module, since in this case one works on screen with a number of patterns at the same time, while the digitizing monitor is smaller, of DIN A4 size, because in this case the work is not done with actual size outlines, it is used instead as a graphic pointer to move the outlines on the marker emulated on the screen, which adds easiness to the locating and combining of outlines onto the material.

The digitizer of the second module comprises a table which is analogous to the digitizer table of the first module, though of smaller dimensions (indeed of DIN A4 size in the preferred embodiment of the inventionon), a locating device, as well analogous, and a menu for optimizing the markers and comprising eight submenus: main menu of the markers program, submenu for marker options, selection submenu, signal submenu, automatic marking submenu, pattern submenu, a submenu for dimension lines and measurements, and a submenu for display options.

The main menu of the marker program comprises the options of going to the submenus, markers, abort, exit, selections, signals, automatic, patterns, dimension lines and display.

The marker options menu comprises: store marker, load marker, abort, exit, discharge marker, discharge box, throw marker, analogy marker, split marker.

The selections submenu comprises: selections, printer, abort, exit, file plotter, drawing plotter and external memory.

The signal submenu comprises: fabric sample, abort, exit, repeat signal x and y, automatic iteration, and sample to fit with patterns.

The automatic marker submenu comprises: automatic markers, automatic batch, abort, exit, enable percentage and time.

The patterns submenu comprises: patterns, move pattern, abort, exit, load pattern, unload pattern, rotation angle, pattern rotation, hand-side (y axis) and up-down (x axis).

The dimension line and measurement submenu comprises: dimension line, enter coordinates, abort, exit, fabric width, tare lines, outline/surface, pattern spacing, expand pattern and expand marker.

The display options submenu comprises: increase DIN size, reduce DIN size, abort, exit, screen up, screen down, screen right, screen left, home screen, middle screen, end screen, all patterns, put/remove text and measurements.

A digitizer menu similar to the previously described menu is used with this digitizer for the first module digitizer.

The second module uses as well the pattern developing/grading menu comprising options for load pattern, store pattern, abort option, exit, load family, symbols, insert symbol, erase symbol, grading, selections, graded sizes (rank), screen yes or not, printer yes or not, file plotter, drawing plotter, outer memory, split pattern, split, put line, erase line, move line, fix line, proportions, standards, box standards, point standards, seams, continuous seam, fix, restore, dimension lines, coordinates, display, refined refining (find distance), line outline refining, line profile / line profile, increase DIN size, automatic zoom, move right, move left, move up, move down, scroll up (alphanumeric window), scroll down, horizontal thread and 90° turn.

The second module uses as well the signal editor menu comprising the options of: load a signal from the database, edit to activate the other editing options, abort an active option, exiting from the signal editor; a plurality of line and arc options; a plurality of modifying options, such as move point, continue line, close outline, draw three-point arc, open symbol at one point, erase point, etc; a plurality of locating options such as two-point and center arc, erase last, restore previous, draw a tangent line, intersect two outlines and continue an arc; a plurality of special point definition options, such as fixing the modifications performed, draw a perpendicular, etc; and a plurality of display options, such as editing a grid or grating to guide the edition which is superimposed to the symbol, insert from the end, unused option, automatic zoom, increase a DIN scale, reduce a DIN scale, etc.

Thanks to the use of the above described icon based menus, the second module has operation advantages analogous to the advantages of the first module.

The first module comprises an enclosure essentially including the corresponding computer central process unit, controllers for peripherals and their interfaces, the system centralized power feed, a voltage stabilizer and a forced ventilation utility.

As the power feed is centralized, it is possible to connect the whole system to a single electric mains socket, no global dysfunction being originated thereby. On the other hand, all of the peripherals such as screen, keyboard, printer, plotter and digitizer are fed from the same unit. This allows that the system leaves no unused connector or cord, with a corresponding reduction of probable breakdowns usually arising when outer connections are exposed.

The voltage stabilizer embodied in the enclosure or cabinet provides a stabilized voltage to the remainder of the equipment including the central process unit, thus reducing in 90 % the possibility of data inconsistencies which are usual in the magnetic data supports fed with non stabilized voltages.

The data storage for filing and safety copy is performed by means of a magnetic tape thus sparing a 70 % in copy time and a 50 % in fungible magnetic materials.

The special forced ventilation dispenses with the conditioning of the system working ambient, because the installed ventilation is enough for carrying out the heat, even more when it is thought that the heat evolved in the internal electronic networks is low because the circuits used are VLSI technology, low resistance circuits.

The first module and the second module comprise a working table designed to be a work station for the user of a data treatment electronic equipment and the usual working place of the pattern designer when he is performing a task independent of the graphic system. To this end the table is free from hindrances such as cabling or the like. With a view to the transport ability and compactness of the equipment, the cabling required for the good performance of the system is laid within the table structure.

The plotter drawing head provided with one pen may be automatically substituted, under program or console, by another pen or a cutter blade the cutting edge of which can be positioned according to the head motion direction, thus providing for cutting cardboard, plastic or the like sheets in accordance to the outline drawn on the material, for a subsequent checking of the cut or for pattern filing.

The head has three selectable pens or heads corresponding to the colours blue and red and to the cutting head.

The plotter comprises two motors adapted to revolve in both directions for driving the head, the said motors being installed in the same transmission belt, such that the speeds and powers of the same can be added or subtracted. This provides for a better control of the inertial forces.

Because the module is an autonomous module, it by no means interferes with the functions of the other modules, thus increasing the system profitability. The wide plotter gate makes it possible to work on fabrics of up to 2 100 mm wide, the maximum size usually existing in most of the textile and manufacturing materials.

The system can, furthermore, be controlled as to its main options, from a small incorporated console, and identifies ASCII HPGL format commands from a series RS232 communications post.

## BRIEF DESCRIPTION OF THE DRAWINGS

For a better understanding of the above description, some sheets of drawings are enclosed, wherein a practical embodiment case is represented in diagrammatic form and only by way of non restrictive example.

In the said drawings:

Figure 1 is a front elevation of the first module of the invention equipment;

Figure 2 is a side elevation of the cabinet containing the central process unit for the first module and the second module;

Figure 3 in a longitudinal section of the digitizer locating pencil used in the first module and the second module;

Figure 4 is a prospective view of the first module digitizing table;

Figure 5 is a detail of the table of the previous Figure, showing the structure thereof;

Figure 6 is a front elevation of the second module of the system of the invention;

Figure 7 is a front elevation of the third module;

Figure 8 is an upper plant view of the module of the previous Figure;

Figure 9 shows the plotter control keyboard;

Figure 10 is a diagram of the signal editing menu;

Figure 11 is a diagram of the digitizing menu;

Figure 12 is a diagram of the pattern developing/grading menu;

Figure 13 is a diagram of the main menu of the markers program;

Figure 14 shows a pattern outline with its gradings, and

Figure 15 is an example of markers on a plurality of patterns.

## DESCRIPTION OF A PREFERRED EMBODIMENT

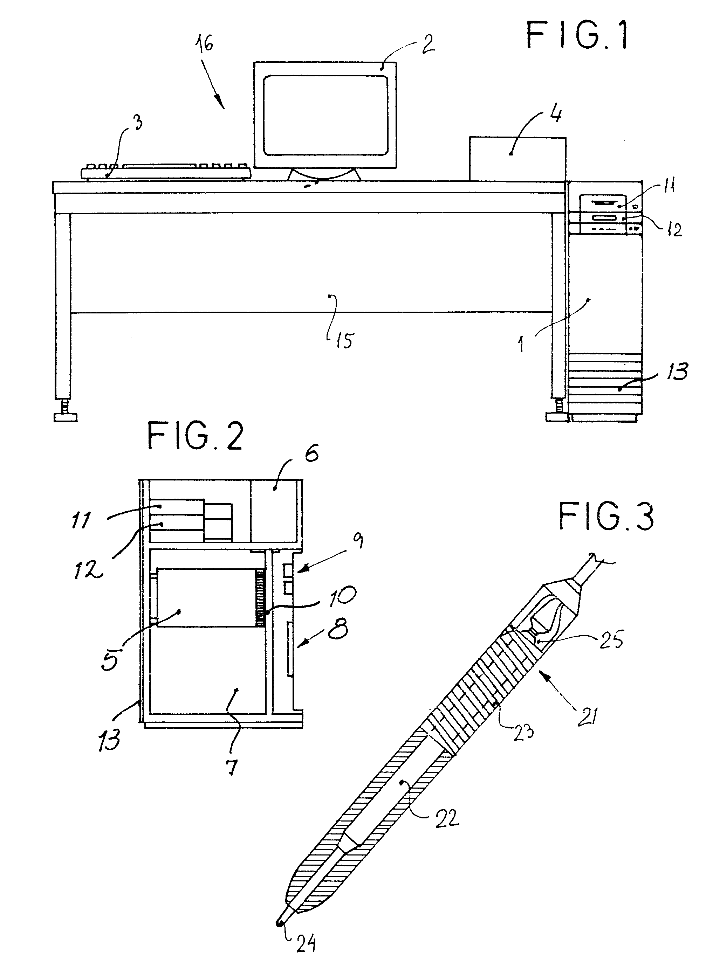

Figure 1 shows the first module comprising a computer central processing unit, a direct access memory unit, a sequential access memory unit (both memory units may be independent or shared), arranged within a cabinet 1; a digitizer, a computer console constituted of the display monitor 2 and the keyboard 3, and a data output peripheral unit, or printer 4.

As it is shown in Figure 1, the cabinet comprises, further to the central process unit 5, a centralized power feed 6 for the whole system, a voltage stabilizer 7 and a forced ventilation utility 8. The Figure also shows the connection sockets 9 for peripherals, the internal connection zone 10, the disk drives 11,12 for reading and writing the computer magnetic diskettes and the ventilation input 13.

As may be seen, the power feed is centralized and the whole module is connected to a single mains socket. All of the peripherals such as the display monitor 2, the keyboard 3, the printer 4, the plotter and the digitizer, are fed by the same unit. It is thus attained that the system leaves no free connector or cable, with a corresponding reduction of breakdown probabilities.

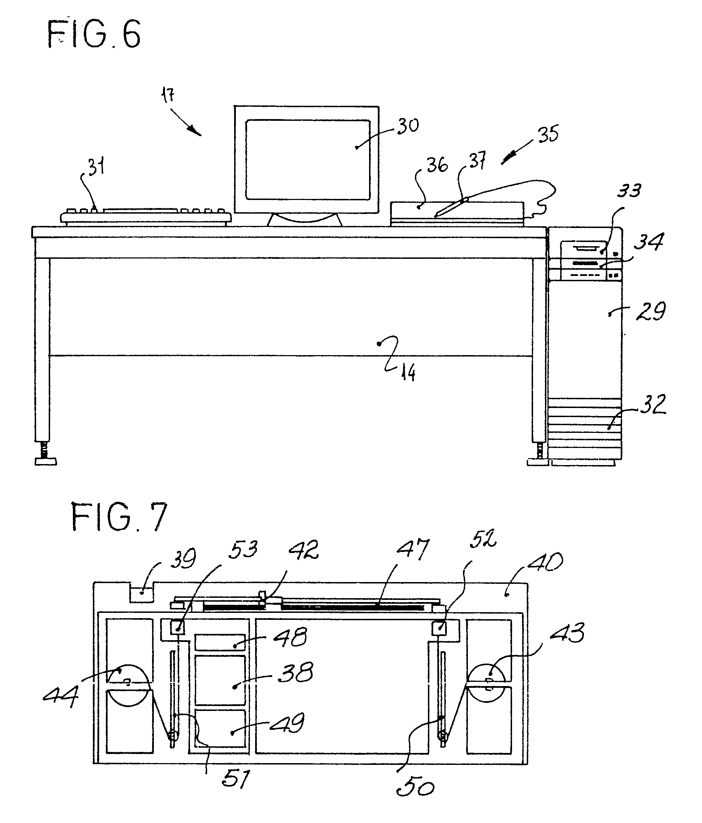

As it can be seen in Figures 1 and 6, the first module and the second module comprise a working table 14, of dimensions suitable for working in the console 16,17 and for the designer and is deprived of hindrances such as cabling and the like. Cables are not visible in the Figures because they are arranged within the table structure.

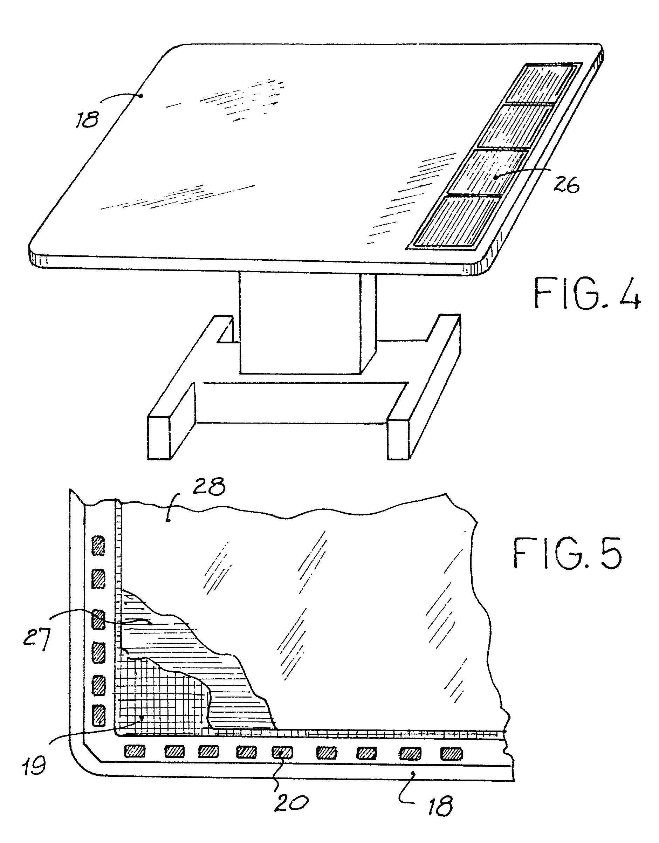

The first module digitizer, shown in Figures 3, 4 and 5, comprises a table 18 including a two dimension grating 19 connected to a network formed of a plurality of integrated circuits 20 to codify the several magnetic field intensities corresponding to every one of the grating junctions, and a locating device 21 (Fig. 3) consisting of a pencil-like body including a metallic core 22, an induction coil 23 surrounding the said core and generating a magnetic field, the intensity of which is picked up in the junction of the grating which is in contact with the outer end 24 of the metallic core 22, and an electric switch contact 25 which is closed under a mere pressure to activate the network. The table is formed with a digitizing menu 26 conprising a plurality of icons adapted to be selected with the locating pencil 21, each said icons corresponding to program options permitting to progressively define an outline on the console 16 of the first module computer.

The grating 19 of the table 18 is covered by a first glass sheet 27 and a covering second plastics sheet 28. Another solution consists in grinding the glass 27 itself.

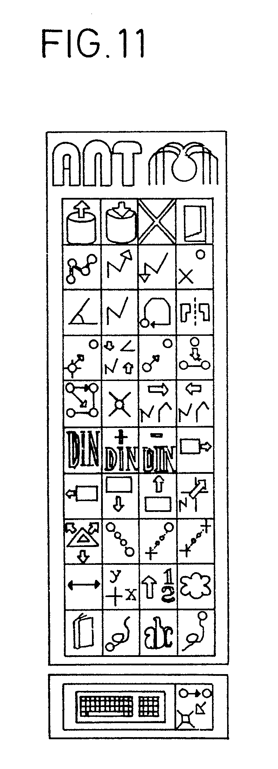

Figure 11 shows the icons of the digitizing menu corresponding to the following options from left to right and from up to down: load pattern, store pattern, abort option, exit, digitize, create outline, erase outline, modifications, vertex, outline (pass point), symmetry, origin change, switch point, move point, insert point, interpolate, erase, move upwards, restore, DIN options, increase DIN size, reduce DIN size, move right, move left, move downwards, centering, automatic zoom, digitized digitizing, digitized refining, refined refining, dimension lines, coordinates, surface perimeters, special points, reference point, thread begining, text insertion and thread end.

The first module digitizer allows to globally digitize at a time shapes of up to a DIN A0 dimension, as the table 18 has just these measurements, thus making it possible to work with actual size outlines.

As shown in Figure 6, the second module comprises, arranged within a cabinet 29, a computer central process unit, controllers and interfaces for peripherals, direct access memory unit and a sequential access memory unit. It comprises also a computer console 17 formed of the display monitor 10 and the keyboard 31. The cabinet 29 comprises, further to the central process unit, a forced ventilation unit, the air input 32 of which is visible, and the read/write units 33,34 for the computer magnetic data supports.

The display monitor 30 of the second module is of a greater size, (for example 20") than the display monitor 2 of the first module (for example of 14"), since in this case screen work is done simultaneously on a number of patterns at a time, whereas the digitizer 35 is smaller, of a DIN A4 size and is located on the table 14.

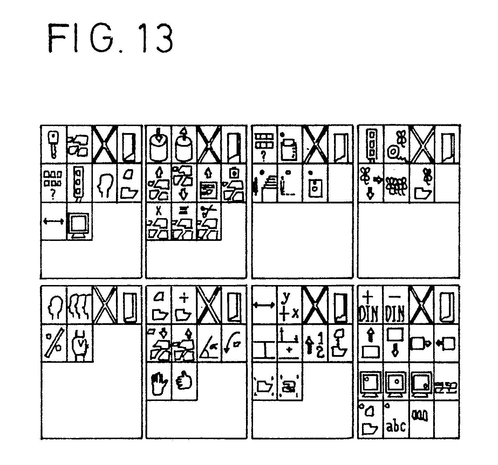

The digitizer 35 of the second module comprises a table 36 similar to the table 18 of the first module digitizer, though of DIN A4 size, a locator device 37 similar as well, and a marker optimizing menu, shown in Figure 13 and comprising eight submenus corresponding to the eight great squares of the Figure, from left to right and from up to down: main menu of the markers program, marker options submenu, selections submenu, signal submenu, automatic marking submenu, pattern submenu, dimension line and measurements submenu, and display options submenu.

The main menu of the markers program comprises, from left to right and from up to down: the options for selecting the submenus, markers, abort, exit, selections, automatic signals, patterns, dimension lines and display.

The marker options submenu comprises, from left to right and from up to down: store marker, load marker, abort, exit, unload box, throw marker, restore, analogy marking and fractionated marker.

The selection submenu comprises, from left to right and from up to down: selections, printer, abort, exit, plotter, plotting drawing and diskette.

The signal submenu comprises, from left to right and from up to down: signals, fabric sample, abort, exit, reproduce signal x and y, automatic reproduction and ample to fit with patterns.

The automatic marking submenu comprises, from left to right and from up to down: automatic marking, automatic batch, abort, exit, enable percentage and time.

The pattern submenu comprises, from left to right and from up to down: patterns, move pattern, abort, exit, load pattern, swap pattern, rotation angle, pattern rotation, side hand (y axis) and up-down (x axis).

The dimension line and measurements submenu comprises, from left to right and from up to down: dimension lines, enter coordinates, abort, exit, fabric width, tare lines, outline/surface, pattern spacing, expand pattern and expand marker.

The display options submenu comprises, from left to right and from up to down: increase DIN size, reduce DIN size, abort, exit, screen up, screen down, screen right, screen left, home screen, center screen, end screen, all patterns, put/remove text and measurements.

This digitizer also uses a digitizing menu similar to the menu as described above for the first module digitizer as shown in Figure 11.

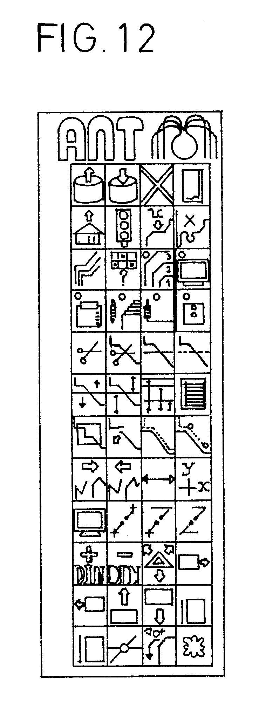

The second module also uses the pattern developing/grading menu shown in Figure 12. This menu comprises, from left to right and from up to down, the options for: load pattern, store pattern, abort option, exit, load family, symbols, insert symbol, erase symbol, grading, selections, sizes to be graded (rank), screen yes or not, printer yes or not, file plotter, drawing plotter, external memory, fractionate pattern, fractionate, put line, erase line, move line, fix line, proportions, standards, box standard, point standards, seams, continuous seam, fix, restore, dimension lines, coordinates, display, refined refining (find distance), refining outline line, outline line - outline line, increase DIN size, reduce DIN size, automatic zoom, move right, move left, move up, move down, scroll up (alphanumeric window), scroll down, horizontal thread and 90° turn.

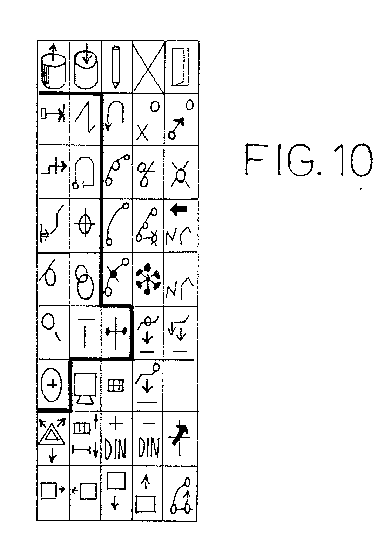

The second module uses also the signal editor menu shown in Figure 10 and comprising the following options, from left to right and from up to down: load a signal from the data base, store a signal in the data base, edit to activate the other editing options, abort an active option and exit from the signal editor; a plurality of line options: begining-end of line, lines and arcs option; a plurality of modifying options: move point, continue line, close outline, draw three point arc, break symbol at one point, erase point and end; a plurality of locating options: two point and center arc, erase last, restore previous, intersect two outlines and continue arc; a plurality of special point definition options: fix the modifications performed, draw a perpendicular, orthogonal, mean, insert at the center point, insert at the beginning and center, and a plurality of display options: edit a grid or grating to guide edition, which is superimposed to the symbol, insert at the end, unused option, automatic zoom, dimensionate grating cells, increase a DIN scale, reduce a DIN scale, center on screen, screen right, screen left, screen down, screen up and interactive modification.

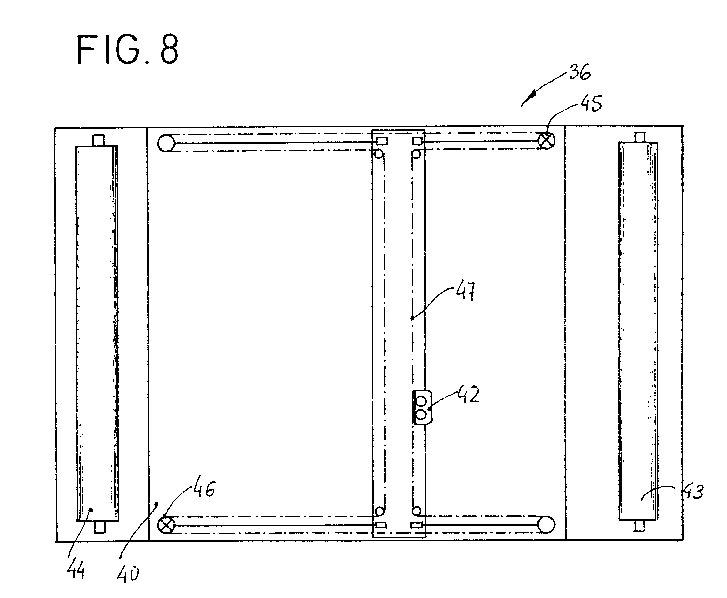

As shown in Figures 7 and 8, the third module comprises a central process unit 38, a controller for the plotter drives and the interfaces thereof, a console 39 for controlling the plotter, provided with a table 40 upon which the material to be scored 41 (paper or cardboard) is placed, with the corresponding plotter head 42, with the head driving means, as well as supports for the replacement heads. The material is coiled in the feed bobbins 43 containing the paper to be scored, and the output bobbins containing the scored paper.

The driving means comprise two motors 45,46 adapted to revolve in two directions, and a toothed belt transmission 47.

both motors 45,46 are mounted on the same transmission belt 47, such that their speeds or powers can be added or subtracted thus controlling the inertial forces.

As indicated above, the plotter head 42 may be automatically substituted by a cutter blade, the cutting edge of which can be set according to the head motion direction with the aid of a third motor.

In Figures 7 and 8 can be seen also the controllers and amplifiers 48 for the motors, the power feed 49 and the paper stretching and aligning bars 50,51 having a fixed stroke and driven by respective motors 52,53.

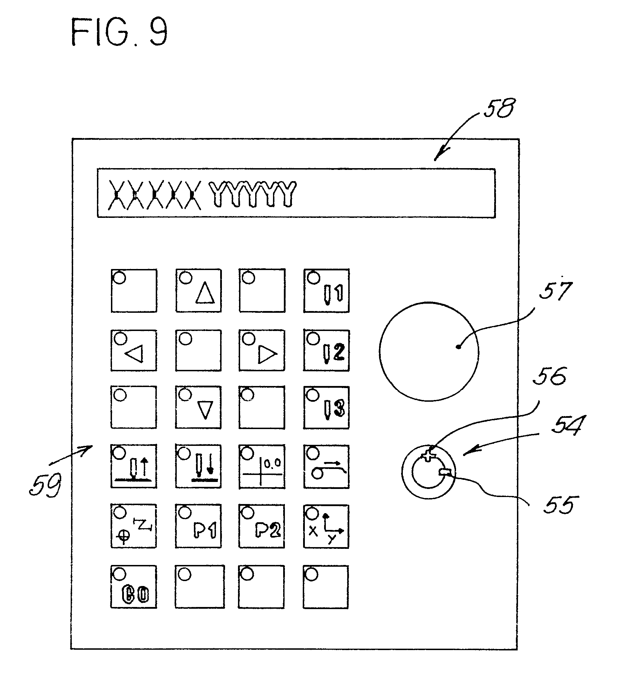

Figure 9 shows the console 39 or the plotter direct manual control and comprising a two-position switch 54, corresponding to start position 55 and stop position 56; an emergency stop switch 57; a display 58 showing the coordinates, the number of the pen used and the situation; and a 24-key keyboard, the keys corresponding, from left to right and from up to down, to: diagonal, pointer up, diagonal, pen 1, pointer left, unused, pointer right, pen 2, diagonal, pointer down, diagonal, pen 3, pen up, pen down, define origin, paper feed, coordinates, point 1, point 2, scale, continue, and three further unused keys.

Operation of the pattern design, grading and marker optimizing system in textile garment industries according to the invention, is as follows:

The first module electronically codifies the in formation related with a two dimension outline and applies thereto a grading or scaling, the information corresponding to the treatments and operations developed on the patterns being permanently stored.

To create an outline, the following procedure is developed:

Starting from an actual existing outline, which may be of cardboard, paper or plastics, a series of points corresponding to the ends or visible geometry of the said outline, are fed to the computer.

When the points have been entered, the computer regenerates the pattern and stores it in a direct access external memory unit. The number of points entered must be enough to allow the pattern regeneration in the computer.

To enter a complete pattern, the reference data accompanying the outline must be defined in first place: if the outline is a part of an ensemble of outlines appertaining to the same article, which part is it, what name, attributed reference or code, etc.

Digitizing of points which can be of different types, begins then:

a) Outline points. They are the points forming the outline or the outlines of a pattern.

b) Reference point. Provides the origin of the relation of the other modules of the other points with this point.

c) Thread line points. These are two points indicating the direction assumed by the thread following the compulsory direction of the fabric or material which the pattern will be applied to.

d) Text insertion point. This indicates the position of beginning of a comment or label to appear on the pattern at the instant of scoring the paper.

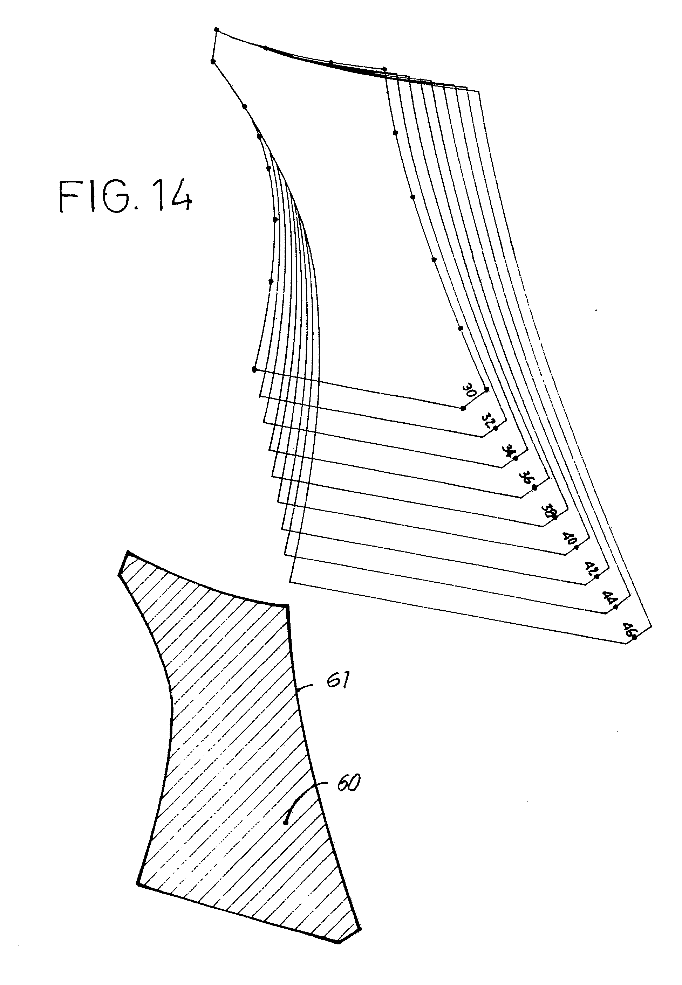

Figure 14 shows a pattern 60 which is defined by the outline 61.

Within one and the same outline, the points hold the relation with the previous one in an increasing order, thus enhancing the room sparings when they are stored in memory and the calculation speed and optimization. The origin point is the first point.

A pattern may have up to three outlines which may be the ones within the other. Every outline has its own origin and follows the same order.

Generally speaking, the point density which needs to be digitized to enter an outline is very low, since the irregular lines are automatically calculated starting from very few points. One and the same pattern may contain up to 200 points.

Modifications of several types can be applied to a given outline already created and stored.

The origin can be changed, thus the order of the points with one another being subject to a displacement.

A point can be moved to another position.

A remarkable factor is that the system according to the invention always selects as the suitable point the closest one to the actual pointer position, dispensing with the need of locating the said pointer exactly on the point, which means a time sparing.

It is also possible to insert a point which will be inserted between the point position closer to the previous pointer position.

Points can be interpolated by specifying the point previous to the new point to interpolate.

All the modifications cn be fixed or dropped from the last time they were fixed, thus returning to the figure initially stored in the memory.

The system according to the invention allows for establishing dimension lines between points on a basis of actual scale, and work may be performed in millimeters, inches, etc, in order to know the dimension that an outline seen on the monitor screen, thus subject to small display distortions, will have in reality.

It is likewise possible to calculate the outline perimeter and the area in the same units as used, as well as to know the coordinates of a point.

There are as well utilities to expand, reduce, center, move the figure, always working with scaling factors of DIN standards.

As previously described, there are also special points providing additional information, such as the reference point, the thread point, and the text insertion point. There is a file with the sizes corresponding to every specific pattern. Figure 14 shows the sizes 30, 32, 34, 36,...46 corresponding to the pattern 60.

The second module locates the outlines stored in the direct access memory unit onto a material band emulated on screen, such that the outline cover the greatest possible material surface.

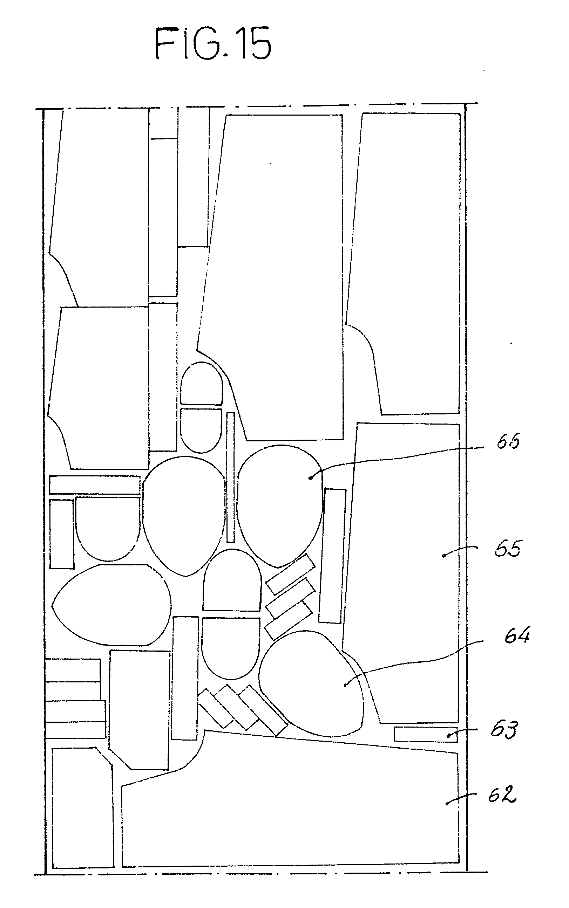

Figure 15 shows a marker optimization, wherein a plurality of outlines (for example 62,63,64,65,66) are disposed onto a surface covering about the whole area of the same.

It must be remembered that in this operation there are several layers of material which will be cut according to the same distribution, rather than a single layer of such material. The several layers of one and the same pattern must be appended in the manufacturing order, as well as the grade and the quality of the stock of lineal meters of the fabric and the material condition, which will affect according to the elasticity and hardness of some parameters of the application, as may be the closeness between patterns and the total thickness of the ensemble of the several layers.

When the outlines have been distributed over the material and thereafter stored in an external memory unit, which in this case may be of direct or sequential access according to the configurations, the role of the third module consists in transferring the data about the pattern location over the material to an analogic physical support, such as paper, at real size or scaled, to give the pattern location in a marking, with a purpose of filing on paper.

This transfer is performed by the plotter, controlled by an autonomous central process unit controlling, by means of specific controllers, the several motors acting upon the plotter head.

Because the markings usually extend over a material length which is greater than the plotter length, it is necessary to draw the markers by sections at fixed distances, the paper being fed a length equal to that of the plotter.

The above description corresponds to a specific embodiment of the invention, though it will be understood that all of the possible variations which are accessible to an expert in the art will be comprised within the scope of the said invention.

## Claims

1. Pattern design, grading and marker optimizing system in garment industries, of the type comprising a first module including a computer processing central unit, a digitizer, a direct access memory unit, a sequential access memory unit, complete or shared, a computer console, controllers and interfaces for peripherals, and eventually a data output peripheral member, the first module electronically codifying the information relating to a two-dimension outline and applies to it a grading or scaling, the informations about treatments and operations performed on the patterns being permanently stored; a second module including a computer processing central unit, a digitizer, a direct access memory unit, a sequential access memory unit and a computer console, this second module locating the outlines which are stored in the direct access memory unit onto a band of material, such that the outlines cover the greatest possible surface of the material; and a third module including a computer processing central unit, a first controller for drives and a second controller for the console, interfaces for the said controllers and a drawing device provided with a table upon which the material to be scored is placed, and the corresponding drawing head and means for operating it, characterized by the fact that the first module digitizer comprises a table including a two-dimension grating connected to a codifying network for the several magnetic field intensities corresponding to every one junction of the grating, and a locating device consisting of a pencil-like body including s metallic core, an induction coil surrounding the core to generate a magnetic field the intensity of which is picked-up at the grating junction in contact with the outer end of the metallic core, and a contact switch which closes merely under contact to activate the network, the table being provided with a digitization menu comprising a plurality of icons adapted to be selected by means of the locating pencil, each said icons corresponding to program options permitting to progressively define an outline on the computer console of the first module.

2. System according to claim 1, characterized in that the icons of the digitizing menu correspond to the options of: load pattern, store pattern, abort option, exit, digitize create outline, erase outline, modifications, vertex, outline (pass point), symmetry, origin change, point switching, move point, insert point, interpolate, erase, move upwards, restore, DIN options, increase DIN size, reduce DIN size, move right, move left, move downwards, centering, automatic zoom, digitized digitizing, digitized refining, dimension lines, coordinates, surface outlines, special points, reference point, thread beginning, text insertion and thread end.

3. System according to claim 1, characterized in that the digitizer of the second module comprises a table which is analogous to the digitizer table of the first module, though of smaller dimensions, a locating device, as well analogous, and a menu for optimizing the markers and comprising eight submenus: main menu of the markers program, submenu for marker options, selection submenu, signal submenu, automatic marking submenu, pattern submenu, a submenu for dimension lines and measurements, and a submenu for display options.

4. System according to claim 1, characterized in that the first module comprises an enclosure essentially including the corresponding computer central process unit, controllers for peripherals and their interfaces, the system centralized power feed, a voltage stabi lizer and a forced ventilation utility.

5. System according to claim 1, characterized in that the plotter drawing head, provided with one pen, may be automatically substituted, under program or console, by another pen or a cutter blade the cutting edge of which can be positioned according to the head motion direction, thus providing for cutting cardboard, plastic or the like sheets in accordance to the outline drawn on the material, for a subsequent checking of the cut or for pattern filing.

6. System according to claim 1, characterized in that the plotter comprises two motors adapted to revolve in both directions for the head displacement, the said motors being installed in the same transmission belt, such that the speeds and powers of the same can be added or subtracted.

FIG.1

FIG.2

FIG.3

18

26

FIG.4

28

FIG.5

27

19

20

18

FIG.6

FIG.7

# FIG. 8

# FIG. 9

FIG. 10

EP 0 338 964 A2

# FIG.11

# FIG. 12

EP 0 338 964 A2

# FIG. 13

FIG. 14

30
32
34
36
38
40
42
44
46

61

60

# FIG.15